# FASCICULE DE BREVET EUROPEEN

(11) **EP 1 086 768 B1**
(45) Date de publication et mention de la délivrance du brevet: **03.09.2003**
(21) Numéro de dépôt: 00402150.7
(22) Date de dépôt: 27.07.2000
(51) Int. Cl.: B23D 19/06

(54) **Machine de refendage à flèche compensée.**
Streifenschere mit kompensierter Durchbiegung
Slitter with compensation of bending

(30) Priorité: 27.07.1999 FR 9909711
(43) Date de publication de la demande: 28.03.2001
(73) Titulaire: REDEX, 45210 Ferrieres (FR)
(72) Inventeur: Coulmont, Jean-Pierre, 45210 La Selle Sur Le Bied (FR); Czternastek, Francis, 45320 Courtenay (FR); Larde, Alain, 95440 Ecouen (FR)
(74) Mandataire: Robert, Jean-Pierre

(56) Documents cités:
- EP-A- 0 287 848
- FR-A- 2 651 456

## Description

La présente invention concerne une machine de refendage d'une bande métallique.

Le refendage est une opération qui consiste à diviser une bande métallique en une pluralité de bandelettes par une découpe multiple de cette bande en continu suivant sa direction longitudinale.

Une machine de refendage comporte principalement un bâti sur lequel sont montés deux arbres parallèles entraînés en rotation par des moyens moteurs et portant chacun une série de couteaux en forme de disques disposés dans des plans perpendiculaires auxdits arbres et croisant à leur périphérie la série de couteaux de l'autre arbre pour former une série de cisailles.

Pour obtenir des produits de haute qualité, il est important d'obtenir une grande précision sur la largeur des bandelettes et la régularité de leurs bords. Cette qualité de découpe suppose que le positionnement transversal des couteaux soit d'une part, maîtrisé et stable au cours de la coupe en continu et d'autre part, aussi régulier que possible sur toute la largeur de la bande découpée. Dans ce souci de précision et de régularité, les constructeurs de ce type de machine cherchent à limiter ou à corriger autant que possible la flexion des arbres porte-couteaux dans le plan qu'ils définissent sous l'effet des efforts de coupe.

Pour limiter la flexion des arbres, on met en oeuvre des arbres de fort diamètre, donc volumineux lourds et coûteux ou des arbres avec un nombre limité de couteaux, ce qui réduit les capacités de la machine et la finesse de refendage.

Il reste cependant dans ces machines une flexion résiduelle qui nuit à la qualité des opérations.

La correction de la flexion est obtenue en imprimant une contrainte de contre flexion aux arbres porte-couteaux (arbres à couteaux). Le document EP 0 287 848 décrit une solution dans laquelle un vérin hydraulique par son extension, tend à écarter l'un des paliers d'extrémité d'un arbre à couteaux du palier adjacent de l'autre arbre autour d'une articulation sphérique sur laquelle les paliers sont bridés ensemble. Ce forçage tend à faire fléchir l'arbre supérieur vers l'arbre inférieur qui lui ne se déforme pas car il est maintenu rigidement sur le bâti de la machine par ses paliers d'extrémité. La correction obtenue n'est que partielle et surtout n'est pas réglable ni ajustable en fonction du travail demandé à la machine. En outre cette construction se prête mal à un asservissement du contrôle du travail au fil de son déroulement.

Par l'invention, il est proposé une machine de refendage permettant de contrôler de manière beaucoup plus fine, en fonction des conditions de travail, la contre flexion imposée aux arbres à couteaux.

A cet effet l'invention a donc pour objet une machine de refendage comportant un bâti sur lequel sont montés deux arbres parallèles entraînés en rotation par des moyens moteurs et portant chacun une série de couteaux en forme de disques disposés dans des plans perpendiculaires auxdits arbres et croisant à leur périphérie la série de couteaux de l'autre arbre pour former une série de cisailles ; la machine est pourvue de moyens mécaniques pour imprimer à au moins l'un des arbres une contre flexion en direction de l'autre pour compenser la flexion produite lors de la coupe tendant à écarter les couteaux d'un arbre des couteaux de l'autre. Selon une caractéristique principale de l'invention, chacun des arbres porte-couteaux est monté à chacune de ses extrémités dans un palier long, monté sur le bâti pour pivoter autour d'un axe perpendiculaire au plan défini par les deux arbres et les moyens mécaniques susdits comportent au moins un vérin tendant à faire tourner chaque palier autour de son axe de pivotement.

On comprend qu'avec cette structure à paliers pivotants, on peut répartir la contre flexion entre les deux arbres. En outre, en agissant de manière indépendante sur chaque paire de paliers, on peut faire varier la forme des contre flèches des arbres pour les adapter au mieux aux irrégularités de coupe rencontrées le long des arbres à couteaux.

Dans un mode de réalisation de l'invention adapté à une structure connue de machine de refendage, son bâti comporte deux cages entre lesquelles s'étendent les arbres à couteaux et dans chacune desquelles est monté un palier d'extrémité de chaque arbre contre une portée cylindrique de la cage dont l'axe coupe perpendiculairement l'axe de l'arbre correspondant tandis que le vérin susdit est disposé entre les deux paliers au-delà de la cage par rapport aux arbres à couteaux.

De manière avantageuse, le corps du vérin forme une cartouche insérée dans le carter de l'un des paliers tandis que sa tige coopère par appui simple avec le carter de l'autre palier.

D'autres caractéristiques et avantages de l'invention ressortiront de la description ci-après d'un exemple de sa réalisation.

Il sera fait référence aux dessins annexés parmi lesquels :
- la figure 1 est une vue en élévation de face schématique d'une machine de refendage conforme à l'invention,
- la figure 2 est une même vue d'une machine selon un mode préféré de réalisation,
- la figure 3 est une vue en bout suivant F de la machine de la figure 2,
- la figure 4 est une vue de détail de la machine des figures 2 et 3 selon un plan de coupe IV-IV de la figure 3,
- la figure 5 est une vue de détail de la machine des figures 2 et 3 selon un plan de coupe V-V de la figure 3.

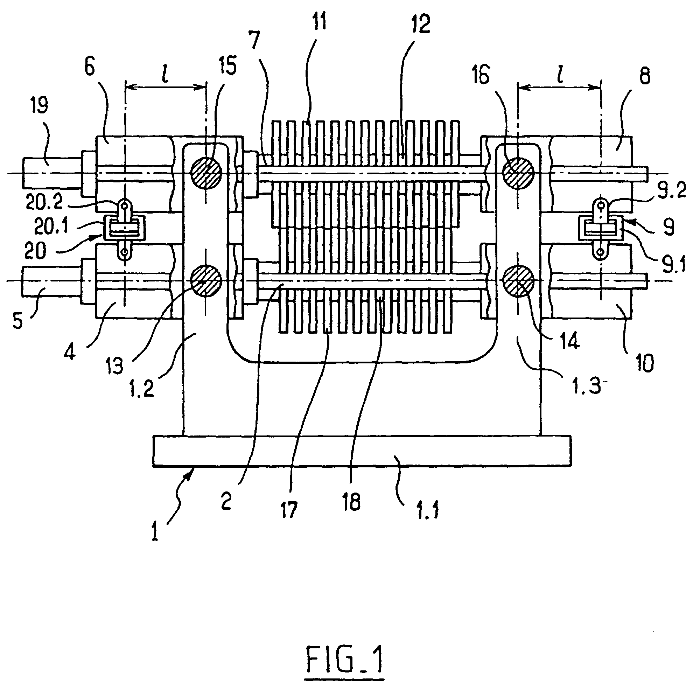

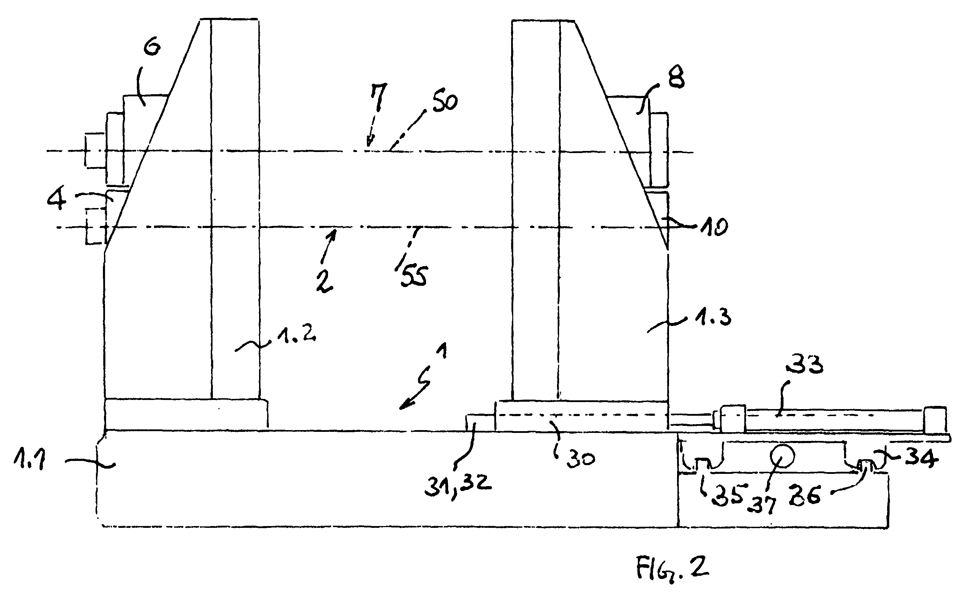

En référence à la figure 1, la machine de refendage conforme à l'invention comporte un bâti 1 comportant un socle 1.1 et une partie supérieure en forme de berceau en U ayant, dans la représentation de la figure 1, une branche verticale vers gauche 1.2 et une branche verticale de droite 1.3.

Deux arbres parallèles 2,7 sont montés sur le bâti 1, entre les branches verticales 1.2 et 1.3 de ce bâti. Les deux arbres 2,7 sont identiques et sont disposés parallèlement dans un plan vertical commun.

Le montage de chacun des arbres 2,7 sur les branches 1.2, 1.3 du bâti 1 est réalisé par l'intermédiaire de paliers longs, avec un palier de gauche 4,6 monté sur la branche de gauche 1.2 du bâti 1 pour pivoter autour d'un axe 13,15 perpendiculaire au plan vertical défini par les arbres 2,7, et un palier de droit 10,8 monté sur la branche de droite 1.3 du bâti 1 pour pivoter autour d'un axe 14,16 perpendiculaire à ce même plan. Les paliers 4,6,8 et 10 possèdent un carter extérieur par lequel ils sont articulés aux branches 1.2 et 1.3 du bâti 2 de manière qu'une partie importante de leur longueur soit en porte-à-faux à l'extérieur de ces branches.

L'entraînement en rotation des arbres 2,7 autour de leurs axes est assuré de façon classique dans ce genre de machine par un motoréducteur unique (non représenté) à deux sorties raccordées aux deux arbres 2,7 par une transmission à cardans (partiellement représentée en 5,19).

Entre les paliers de gauches 4,6 et de droite 8,10, les arbres 2,7 portent respectivement des séries de couteaux 17,11 en forme de disques perpendiculaires aux axes de ces arbres et séparés par des entretoises 18,12. Ces deux séries de couteaux 17,11 portées par les arbres 2,7 se croisent à leur périphérie de manière à former une série de cisailles apte à découper en une pluralité de bandelettes la bande métallique qui défile entre les deux séries de couteaux et qui est ainsi refendue.

Deux vérins de poussée 9,20 sont respectivement montés sur des paliers de droite 8,10 d'une part et de gauche 4,6 d'autre part. Plus précisément, le vérin 9 possède un corps 9.1 articulé au carter du palier de droite 10 de l'arbre inférieur 2 et une tige 9.2 articulée au carter extérieur du palier de droite 8 de l'arbre supérieur 7. De même, le vérin 20 possède un corps 20.1 articulé au carter du palier de gauche 4 de l'arbre inférieur 2 et une tige 20.2 articulée au carter du palier de gauche 6 de l'arbre supérieur 7. Les articulations du corps et de la tige de chacun des deux vérins 9,20 définissent un plan vertical perpendiculaire aux axes des arbres 2,7 et situé à l'extérieur du U formé par les branches 1.2 et 1.3 du bâti 1, à une distance 1 du plan vertical défini par les axes 13,15 d'une part et 14,16 d'autre part. Cette distance 1 entre les articulations des vérins aux paliers et les articulations des paliers au bâti constitue un bras de levier permettant aux vérins 9,20 d'exercer sur les paliers 8,10 d'une part et sur les paliers 4,6 d'autre part des couples de contre flexion autour des axes 16,14 et 13,15.

Les vérins 9,20, qui peuvent être du type hydraulique, pneumatique ou électrique, sont pilotés par une unité électronique (non représentée à la figure 1). Cette unité de pilotage électronique (automate programmable par exemple) pilote les deux vérins 9 et 20 indépendamment l'un de l'autre, de manière à ce qu'ils exercent sur les paliers de droite 8,10 et de gauche 4,6 des couples différents qui sont calculés de façon dynamique en fonction de la déformée en flexion des arbres à obtenir.

En service, les arbres 2,7 sont entraînés par le motoréducteur (non représenté) via les transmissions 5,19, en rotation autour de leurs axes propres en sens inverses l'un de l'autre. Les séries de couteaux 17,11 qui sont solidaires de ces arbres tournent également en sens inverse l'une de l'autre à la façon des rouleaux d'un laminoir.

Une bande métallique à refendre est engagée entre les deux séries de couteaux 17,11 suivant sa direction longitudinale. Les cisailles formées par le croisement des deux séries de couteaux 17,11 réalisent un découpage de la bande métallique en une pluralité de bandelettes suivant la direction longitudinale de la bande.

Cette découpe génère d'importants efforts de coupe sur les couteaux provoquant une déformation en flexion des arbres 2,7. Cette flexion se traduit par un pivotement des deux extrémités de chacun des arbres 2,7, lesquelles extrémités sont assujetties aux paliers 4,6,8, 10. Ces paliers tendent par conséquent eux aussi à pivoter autour des axes 13,14,15,16 en conséquence de la flexion des arbres 2,7.

Conformément à l'invention, cette flexion est compensée de la manière suivante. En fonction de l'épaisseur et du type de tôle à refendre et plus généralement du programme de coupe, l'unité de pilotage électronique alimente les vérins 9,20 à une pression déterminée de telle sorte qu'ils exercent un effort de poussée entre les paliers de gauche 4,6 d'une part et les paliers de droite 8,10 d'autre part. Ces efforts de poussée se traduisent du fait du bras de levier 1 entre les axes d'articulations des vérins aux paliers et les axes d'articulation 13,14,15,16 des paliers au bâti 1, par un couple de contre flexion qui tend à faire pivoter les paliers 4,6,8,10 pour les ramener dans leur position normale horizontale correspondant à une géométrie rectiligne des arbres 2,7. La pression d'alimentation des vérins 9,20 est prédéterminée en fonction des différents paramètres du refendage et peut ensuite être ajustée de façon dynamique, à la hausse ou à la baisse, en fonction de la déformation constatée des arbres 2,7.

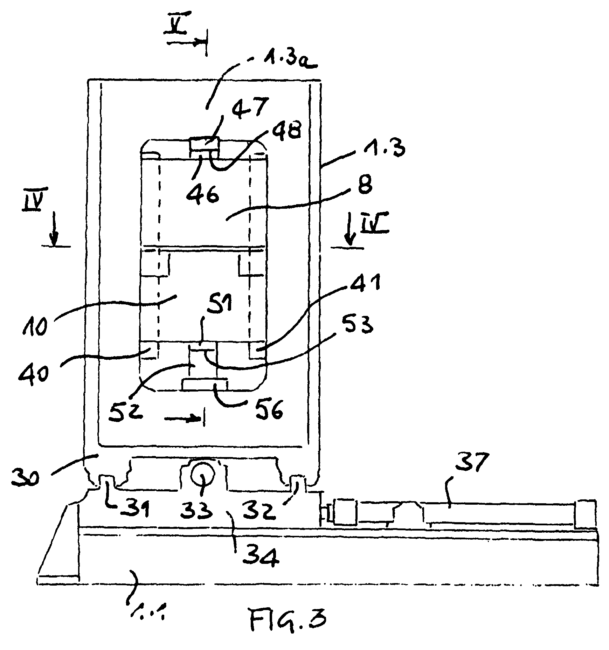

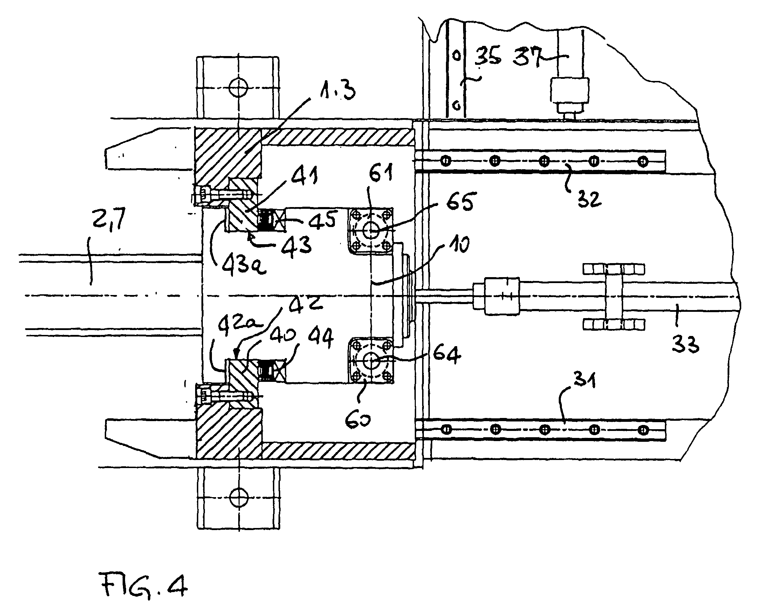

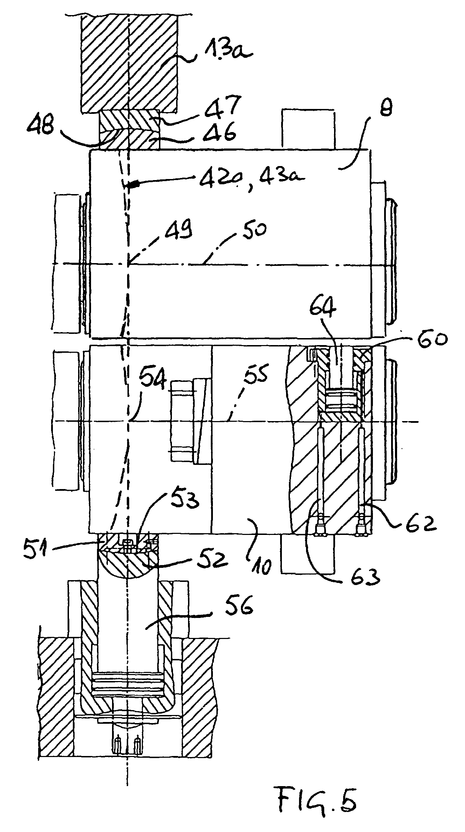

Aux figures 2 à 5 suivantes, on a représenté schématiquement un mode de réalisation industrielle de la machine qui fait l'objet de la figure précédente. Certains des éléments déjà décrits portent sur ces figures les mêmes références.

Le bâti 1 comporte sur le socle 1.1 deux cages 1.2 et 1.3 dont l'une 1.2 est fixe et l'autre 1.3 mobile d'une part, dans la direction des arbres 2 et 7 et d'autre part, perpendiculairement à cette direction. A cet effet la cage 1.3 est montée sur un chariot 30 pouvant circuler sur des rails 31, 32, parallèles aux arbres 2 et 7, grâce à un vérin 33 de manoeuvre. Il est ainsi possible de dégager l'extrémité de droite (sur la figure 2) des arbres de leurs paliers 8, 10 portés par la cage 1.3. Le chariot 30 est alors pris en charge par une table 34 montée sur des rails 35, 36 solidaires du socle 1.1 et perpendiculaires aux rails 31, 32. Un vérin 37 assure le déplacement de la table 34 sur ces rails, ce qui permet d'escamoter latéralement la cage 1.3 par rapport aux arbres 2 et 7 et d'accéder ainsi aux couteaux pour les changer.

Dans chaque cage 1.2, 1.3, chaque palier 6 et 8 de l'arbre supérieur 7 est monté de la manière suivante. La cage correspondante (par exemple la cage 1.3) est pourvue de deux règles verticales 40, 41 introduites dans des rainures latérales 42, 43 de chaque carter. Des moyens de précontrainte 44, 45 maintiennent le flanc 42a, 43a de chaque rainure en appui ferme sur la face de la règle correspondante tournée vers les arbres 2 et 7. Les paliers supérieurs 6 et 8 sont en outre équipés en partie supérieure d'une pièce 46 qui porte sur un coussinet 47 porté par la traverse supérieure de la cage correspondante (1.3a pour la cage 1.3). La surface d'appui 48 des pièces 46 et 47 est une surface cylindrique d'axe horizontal 49 perpendiculaire à l'axe 50 de l'arbre supérieur 7 (axe du palier 8) et qui lui est sécant. Les paliers 6 et 8 sont par ailleurs maintenus fixes dans la cage correspondante par des moyens non représentés leur interdisant de glisser vers le bas sous l'effet de la gravité le long des règles 40, 41.

Les paliers inférieurs 4 et 10 coopèrent de la même manière que les paliers supérieurs avec les règles 40, 41. Ces paliers sont en partie basse équipés d'une pièce telle que 51 pour le palier 10, qui repose sur un coussinet 52 avec comme surface de contact une surface cylindrique 53 d'axe 54 parallèle à l'axe 49 et sécant de l'axe 55 des paliers 4 et 10 (confondu avec l'axe de l'arbre inférieur 2). Chaque coussinet 52 soutenant chaque palier inférieur est lui-même porté par un vérin hydraulique 56 qui permet d'ajuster la position de l'arbre 2 par rapport à celle de l'arbre 7 et ainsi de régler la valeur du croisement des couteaux. Le maintien de la position de l'arbre 2 est assuré par un asservissement de l'alimentation/échappement de chaque vérin 56 incorporant un capteur de position non représenté.

Les carters de chaque palier 4, 6, 8 et 10 ont une forme extérieure parallélépipédique de sorte que les paliers inférieurs 4, 10 présentent une face sensiblement plane et horizontale en regard d'une face semblable des paliers supérieurs 6 et 8.

Dans les coins extérieurs des paliers inférieurs, les carters sont équipés de petits vérins hydrauliques (60, 61 pour le palier 10) dont le corps est inséré sous forme de cartouche dans les carters où sont ménagés les canaux 62 et 63 d'alimentation et d'échappement de chaque vérin.

La tige 64, 65 de chaque vérin est à l'état rétracté escamotée jusqu'au niveau de la surface supérieure du carter de palier correspondant alors que par son extension elle vient prendre appui sur la surface inférieure du carter de chaque palier supérieur.

L'alimentation synchronisée des vérins 60, 61 provoque une rotation des paliers autour respectivement des axes 49 et 54, rotation permise par une forme appropriée du profil des flancs 42a et 43a des rainures 42 et 43 de chaque carter (voir figure 5) qui peuvent ainsi légèrement glisser sur les règles 40, 41. Ce pivotement forcé entraîne, comme précédemment décrit en regard de la figure 1, une contre flexion des arbres 2 et 7 l'un vers l'autre venant contrer la flexion engendrée par la découpe des tôles au cours de leur refendage.

Par une commande indépendante des paires de vérins insérés dans les carters de paliers 4 et 10, il est possible de créer des déformées d'arbre non symétriques par rapport à un plan transversal médian de la machine. Il est également possible de piloter l'alimentation des vérins tels que 60, 61 par un dispositif d'asservissement qui comprend des capteurs de pression d'alimentation des vérins reliés à un automate programmé pour les différents travaux de refendage à réaliser.

## Revendications

1. Machine de refendage comportant un bâti (1) sur lequel sont montés,chacun par deux paliers longs (4, 10, 6, 8), deux arbres parallèles (2, 7) entraînés en rotation par des moyens moteurs (5) et portant chacun une série de couteaux (11, 17) en forme de disques disposés dans des plans perpendiculaires auxdits arbres et croisant à leur périphérie la série de couteaux de l'autre arbre pour former une série de cisailles, la machine est pourvue de moyens mécaniques pour imprimer à au moins l'un des arbres une contre flexion en direction de l'autre pour compenser la flexion produite lors de la coupe tendant à écarter les couteaux d'un arbre des couteaux de l'autre, **caractérisée en ce que** chacun des paliers longs (4, 10, 6, 8), est monté sur le bâti (1) pour pivoter autour d'un axe (13, 14, 15, 16) perpendiculaire au plan défini par les deux arbres (2, 7) et **en ce que** les moyens mécaniques susdits comportent au moins un vérin (9, 20) tendant à faire tourner chaque palier autour de son axe de pivotement.

2. Machine selon la revendication 1, **caractérisée en ce que** son bâti comporte deux cages (1.2, 1.3) entre lesquelles s'étendent les arbres (2, 7) à couteaux et dans chacune desquelles est monté un palier (4, 6, 8, 10) d'extrémité de chaque arbre (2, 7) contre une portée cylindrique (48, 53) de la cage dont l'axe (49, 54) coupe perpendiculairement l'axe (50, 55) de l'arbre correspondant et **en ce que** le vérin (60, 61) susdit est disposé entre les deux paliers (8, 10), au-delà de la cage (1.3) par rapport aux arbres à couteaux (2, 7).

3. Machine selon la revendication 2, **caractérisée en ce que** le corps du vérin (60, 61) forme une cartouche insérée dans le carter de l'un des paliers (10) tandis que sa tige (64) coopère par appui simple avec le carter de l'autre palier (8).

4. Machine selon la revendication 3, **caractérisée en ce qu'**elle comporte deux vérins (60, 61) entre les deux paliers (8, 10) portés par une cage (1.3)

5. Machine selon la revendication 4, **caractérisée en ce qu'**elle comporte deux vérins entre les deux paliers portés par l'autre cage (1.2).

6. Machine selon la revendication 4, **caractérisée en ce que** les paires de vérins (60, 61) sont commandées de manière indépendante.

## Patentansprüche

1. Streifenschneidemaschine, umfassend ein Gestell (1), an dem jeweils mittels zweier Längslager (4, 10, 6, 8) zwei parallele Wellen (2, 7) gelagert sind, die durch Antriebsmittel (5) in Drehrichtung angetrieben werden und jeweils eine Reihe von Schneidmessern (11, 17) in Form von Scheiben tragen, die in senkrecht zu den genannten Wellen verlaufenden Ebenen angeordnet sind und an ihrem Umfang die Reihe von Schneidmessem der anderen Welle kreuzen, um eine Reihe von Scheren zu bilden, wobei die Maschine mit mechanischen Mitteln versehen ist, um mindestens einer der Wellen eine Gegenbiegung in Richtung der anderen zu verleihen, um die während des Schneidens hervorgerufene Biegung auszugleichen, die darauf abzielt, die Schneidmesser der einen Welle von den Schneidmessern der anderen Welle zu entfernen, **dadurch gekennzeichnet, daß** jedes der Längslager (4, 10, 6, 8) derart am Gestell (1) gelagert ist, daß es um eine Achse (13, 14, 15, 16) schwenkt, die senkrecht zu der Ebene verläuft, die von den beiden Wellen (2, 7) festgelegt wird, und daß die obengenannten mechanischen Mittel mindestens einen Zylinder (9, 20) umfassen, der darauf abzielt, jedes Lager um dessen Schwenkachse zur Drehung zu bringen.

2. Maschine nach Anspruch 1, **dadurch gekennzeichnet, daß** ihr Gestell zwei Ständer (1.2, 1.3) umfaßt, zwischen denen sich die Wellen (2, 7) mit Schneidmessern erstrecken und in denen jeweils ein Endlager (4, 6, 8, 10) jeder Welle (2, 7) an einer zylindrischen Auflagefläche (48, 53) des Ständers gelagert ist, deren Achse (49, 54) die Achse (50, 55) der entsprechenden Welle senkrecht schneidet, und daß der obengenannte Zylinder (60, 61) zwischen den beiden Lagern (8, 10) angeordnet ist, auf der den Messerwellen (2, 7) abgewandten Seite des Ständers (1.3).

3. Maschine nach Anspruch 2, **dadurch gekennzeichnet, daß** das Gehäuse des Zylinders (60, 61) einen Einsatz bildet, der in das Gehäuse eines der Lager (10) eingesetzt wird, während seine Stange (64) mittels einfacher Auflage mit dem Gehäuse des anderen Lagers (8) zusammenwirkt.

4. Maschine nach Anspruch 3, **dadurch gekennzeichnet, daß** sie zwischen den beiden von einem Ständer (1.3) getragenen Lagern (8, 10) zwei Zylinder (60, 61) umfaßt.

5. Maschine nach Anspruch 4, **dadurch gekennzeichnet, daß** sie zwischen den beiden von dem anderen Ständer (1.2) getragenen Lagern zwei Zylinder umfaßt.

6. Maschine nach Anspruch 4, **dadurch gekennzeichnet, daß** die Zylinderpaare (60, 61) unabhängig voneinander gesteuert werden.

## Claims

1. A slitting machine comprising a structure (1) in which two parallel shafts (2, 7) are each mounted by means of two long bearings (4, 10, 6, 8), the shafts being driven in rotation by motor means (5), and each carrying a series of knives (11, 17) in the form of disks disposed in planes perpendicular to said shafts, the peripheries of the knives on each shaft crossing the series of knives on the other shaft so as to form a series of shears, the machine being provided with mechanical means for causing at least one of the shafts to bend towards the other in order to compensate for the bending produced during cutting that tends to move the knives of one shaft away from the knives of the other, the machine being **characterized in that** each of the long bearings (4, 10, 6, 8) is mounted on the structure (1) to pivot about an axis (13, 14, 15, 16) perpendicular to the plane defined by the two shafts (2, 7), and **in that** the above-mentioned mechanical means comprise at least one actuator (9, 20) tending to cause each bearing to turn about its pivot axis.

2. A machine according to claim 1, **characterized in that** its structure comprises two cages (1.2, 1.3) between which the knife shafts (2, 7) extend and in each of which there is mounted one of the end bearings (4, 6, 8, 10) of each shaft (2, 7) against a cylindrical bearing surface (48, 53) of the cage whose axis (49, 54) intersects the axis (50, 55) of the corresponding shaft perpendicularly, and **in that** the above-mentioned actuator (60, 61) is disposed between the two bearings (8, 10) on the side of the cage (1.3) opposite from the side adjacent to the knife shafts (2.7).

3. A machine according to claim 2, **characterized in that** the cylinder of the actuator (60, 61) forms a cartridge inserted in the casing of one of the bearings (10) while the rod (64) thereof co-operates with the casing of the other bearing (8) merely by pressing thereagainst.

4. A machine according to claim 3, **characterized in that** it has two actuators (60, 61) between the two bearings (8, 10) carried by one cage (1.3).

5. A machine according to claim 4, **characterized in that** it includes two actuators between the two bearings carried by the other cage (1.2).

6. A machine according to claim 4, **characterized in that** the pairs of actuators (60, 61) are controlled in independent manner.
